# EUROPÄISCHE PATENTSCHRIFT

(11) **EP 4 296 489 B1**
(45) Veröffentlichungstag und Bekanntmachung des Hinweises auf die Patenterteilung: **29.01.2025**
(21) Anmeldenummer: 23180029.3
(22) Anmeldetag: 19.06.2023
(51) Int. Cl.: F02C 6/08, F02C 7/045, F02C 7/055, F02C 9/18

(54) **LUFTEINLASS**
AIR INTAKE
ENTRÉE D'AIR

(30) Priorität: 23.06.2022 DE 102022115659
(43) Veröffentlichungstag der Anmeldung: 27.12.2023
(73) Patentinhaber: Rolls-Royce Deutschland Ltd & Co KG, 15827 Blankenfelde-Mahlow (DE)
(72) Erfinder: MACK, Gregory, 15827 Blankenfelde-Mahlow (DE); STEGER, Mathias, 15827 Blankenfelde-Mahlow (DE); HISCHEMÖLLER, Saskia, 15827 Blankenfelde-Mahlow (DE); KNOBEN, Kjeld, 15827 Blankenfelde-Mahlow (DE)

(56) Entgegenhaltungen:
- FR-A1- 3 041 380
- US-A1- 2010 126 182
- US-A1- 2016 031 290

## Beschreibung

Die Erfindung betrifft einen Lufteinlass gemäß dem Oberbegriff des Patentanspruchs 1.

Es ist bekannt, an einer überströmten Fläche einen Lufteinlass auszubilden, durch den Luft in einen Abströmkanal geleitet wird. Ein Beispiel für einen bekannten Einlass stellt der sogenannte NACA-Einlass dar, zuerst beschrieben von Frick, Charles W., et al. NACA ACR Nr. 5120: "An Experimental Investigation of NACA Submerged-Duct Entrances", NACA, 13. November 1945. Ein weiterer Lufteinlass nach dem Stand der Technik ist aus dem Dokument US2010/126182 A1 bekannt.

Eine Herausforderung bei der Konstruktion vorteilhafter Lufteinlässe besteht darin, dass diese nicht nur für den geöffneten Zustand, wenn Luft durch den Abströmkanal strömt, im Hinblick auf strömungsdynamische Verluste zu optimieren sind, sondern auch der Zustand zu betrachten ist, wenn der Abströmkanal verschlossen ist (beispielsweise durch ein Ventil). In letzterem Fall erzeugt die vorbeiströmende Luft durch aeroakustische Rückkopplungsmechanismen Resonanzen im Abströmkanal, die akustisch relevant sind. Der vorliegenden Erfindung liegt die Aufgabe zu Grunde, einen Lufteinlass bereitzustellen, der sowohl im Hinblick auf seine akustischen Eigenschaften als auch im Hinblick auf seine aerodynamischen Eigenschaften vorteilhaft ist, d. h. sowohl akustische Resonanzen als auch aerodynamische Strömungsverluste reduziert.

Diese Aufgabe wird durch einen Lufteinlass mit den Merkmalen des Anspruchs 1 gelöst. Ausgestaltungen der Erfindung sind in den abhängigen Ansprüchen angegeben.

Danach betrachtet die Erfindung einen Lufteinlass in einer Oberfläche, der dazu vorgesehen ist, von einem Fluid überströmt zu werden. Der Lufteinlass umfasst eine Öffnung, die eine Längsachse aufweist, wobei der Lufteinlass dazu vorgesehen ist, in Richtung der Längsachse mit dem Fluid überströmt zu werden. Dabei weist die Öffnung einen stromaufseitigen Rand und einen stromabseitigen Rand auf. Weiter umfasst der Lufteinlass einen sich an die Öffnung anschließenden Abströmkanal, der sich winklig zu der Oberfläche erstreckt, Der Abströmkanal umfasst eine Innenwand, die eine stromaufseitige Mantelfläche und eine stromabseitige Mantelfläche aufweist, wobei die stromaufseitigen Mantelfläche sich an den stromaufseitigen Rand der Öffnung und die stromabseitige Mantelfläche an den stromabseitigen Rand der Öffnung anschließt.

Es ist vorgesehen, dass die Öffnung angrenzend an den stromaufseitigen Rand mit einem Gitter teilweise oder vollständig abgedeckt ist und der Abströmkanal im Bereich seiner stromaufseitigen Mantelfläche eine in den Abströmkanal ragende Ausbuchtung aufweist, die in Längsrichtung des Abströmkanals angrenzend an den stromaufseitigen Rand stetig in ihrer Dicke zunimmt, ein Dickenmaximum bildet und nach dem Dickenmaximum stetig in ihrer Dicke abnimmt.

Die erfindungsgemäße Lösung beruht auf dem Gedanken, strömungsmechanische Verluste, die mit einer Strömungsablösung verbunden sind, dadurch zu reduzieren, dass eine Strömungsablösung durch die Bereitstellung einer im Abströmkanal ausgebildeten Ausbuchtung stromab in den Abströmkanal verschoben und die Ausdehnung eines Ablösungsgebiets reduziert wird. Diese Lösung beruht auf der Erkenntnis, dass an einem unstetigen (scharfkantigen) Übergang in den Abströmkanal eine geometrieinduzierte Strömungsablösung erfolgt. Die scharfe Kante markiert dabei den Beginn des Ablösegebiets. Die Ausdehnung des Ablösegebiets wird beeinflusst durch den Winkel, in dem der Abströmkanal zu der überströmten Fläche bzw. Hauptströmungsrichtung steht, die Parameter der Strömung wie zum Beispiel Strömungsgeschwindigkeit und Strömungsturbulenz, sowie den entnommenen Massestrom durch den Abströmkanal. Durch die erfindungsgemäß vorgesehene Ausbuchtung im Abströmkanal, die an den stromaufseitigen Rand der Öffnung anschließt, kann die Strömungsablösung stromab in den Abströmkanal verlagert und die Ausdehnung des Ablösungsgebiets reduziert werden. Ein scharfkantiger Übergang wird durch die Ausbuchtung ersetzt. Diese Überlegungen gelten für den Fall, dass der Abströmkanal geöffnet ist und von Luft durchströmt wird.

Die Erfindung beruht auf dem weiteren Gedanken, eine Ausbuchtung an der stromaufseitigen Mantelfläche des Abströmkanals mit der Bereitstellung eines Gitters, das zumindest angrenzend an den stromaufseitigen Rand auf der Öffnung angeordnet ist, zu kombinieren. Durch die Bereitstellung eines Gitters werden akustische Resonanzen bei geschlossenem Abströmkanal reduziert, da das Gitter kohärente Strömungsstrukturen, die zur Ausbildung von Resonanzen führen, ausmischt.

Durch die Kombination einer stromaufseitigen Ausbuchtung mit einem Gitter werden die Eigenschaften des Abströmkanals hinsichtlich der Vermeidung aeroakustischer Resonanzen bei einem geschlossenen Abströmkanal und strömungsmechanischer Verluste bei einem offenen Abströmkanal verbessert. Dabei erhöht die Ausbuchtung im Abströmkanal zusätzlich die resonanzmindernde Wirkung des Gitters. Dies erfolgt durch die Verschiebung der Strömungsablösung von der Vorderkante bzw. vom stromaufseitigen Rand der Öffnung stromab in den Abströmkanal. Mit der Verschiebung der Strömungsablösung wird auch die resultierende abgelösten Scherschicht derart beeinflusst, dass in Verbindung mit dem Gitter die Anregung akustischer Resonanzen effektiv reduziert wird.

Ein weiterer, mit der vorliegenden Erfindung verbundener Vorteil besteht darin, dass die beschriebenen Aspekte der Erfindung erreicht werden, ohne dass strömungsbeeinflussende Geometrien außerhalb des Abströmkanals anzubringen sind.

Die erforderlichen baulichen Maßnahmen beschränken sich ausschließlich auf den Abströmkanal, wodurch die Grundgeometrie der Öffnung unverändert bleibt. Dadurch eignet sich die beschriebene Erfindung auch für geometrisch beengte Verhältnisse und ermöglicht einfache Nachrüstungen bestehender Systeme, was abgrenzend zum NACA-Einlass nicht der Fall ist. Darüber hinaus wird durch die Vermeidung verblockender Elemente in der Hauptströmung die Entstehung zusätzlicher strömungsmechanischer Verluste verhindert.

Insbesondere sind keine zusätzlichen, besonderen baulichen Maßnahmen im Hinblick auf die Ausbildung der Öffnung in die Berandung der Hauptströmung erforderlich, wie dies beim NACA-Einlass der Fall ist. Dies baulich einfach zu realisierende erfindungsgemäße Lösung vermeidet strömungsmechanische Verluste in der Hauptströmung.

Es wird darauf hingewiesen, dass im Sinne der vorliegenden Erfindung die stromaufseitige Mantelfläche des Abströmkanals diejenige Seite des Abströmkanals bezeichnet, die an den stromaufseitigen Rand der Öffnung anschließt und der Strömungsrichtung zugewandt ist. Im Falle eines kreisförmigen Querschnitts des Abströmkanals wird die stromaufseitige Mantelfläche im Querschnitt durch den 180° Kreisbogen gebildet, der bezogen auf die Strömungsrichtung stromaufseitig angeordnet ist. Die stromabseitige Mantelfläche wird dementsprechend durch den gegenüberliegenden 180° Kreisbogen gebildet.

Eine Ausgestaltung der Erfindung sieht vor, dass die Kontur der Ausbuchtung in einem Anfangsbereich einen tangentialen Übergang zum stromaufseitigen Rand der Öffnung und in einem Endbereich einen tangentialen Übergang in eine Grundform des Abströmkanals bildet. Als Grundform des Abströmkanals wird dabei die Form bezeichnet, die der Abströmkanal ohne die Ausbuchtung aufweist. Dies ist beispielsweise eine im Querschnitt kreisförmige Form. In diesem Fall geht die Kontur der Ausbuchtung in dem Endbereich tangential in die Kreisform des Abströmkanals über.

Eine weitere Ausgestaltung der Erfindung sieht vor, dass die Ausbuchtung stromaufwärts des Dickenmaximums stärker gekrümmt ist als stromabwärts des Dickenmaximums. Durch eine derartige Konturierung der Ausbuchtung wird ein Strömungsabriss minimiert.

In weiteren Ausgestaltungen der Erfindung ist vorgesehen, dass die lokale Dicke der Ausbuchtung in Umfangsrichtung variiert und dabei ein Maximum zwischen zwei Seitenkanten der Ausbuchtung einnimmt. Die Ausbuchtung besitzt somit einen definierten Verlauf zum einen in Längsrichtung und zum anderen in Umfangsrichtung, wobei die Ausbuchtung in beiden Richtungen ein Maximum ausbildet. Dies bedeutet insbesondere, dass für jede Längsposition der Ausbuchtung der Verlauf der Ausbuchtung in Umfangsrichtung variiert.

Die beiden Seitenkanten der Ausbuchtung, zwischen denen die Dicke der Ausbuchtung in Umfangsrichtung variiert, sind dabei beispielsweise in Umfangsrichtung maximal 180° beabstandet. Die Seitenkanten können dabei geradlinig oder gebogen ausgebildet sein. In einer Ausführungsvariante ist vorgesehen, dass die Ausbuchtung in Umfangsrichtung symmetrisch bezogen auf die Seitenkanten ausgebildet ist, die Ausbuchtung somit symmetrisch an der stromaufseitigen Mantelfläche des Stromkanals ausgebildet ist.

Dabei kann vorgesehen sein, dass die Ausbuchtung an der stromaufseitigen Mantelfläche in einem Längsschnitt des Abströmkanals maximal ist, der durch die Längsachse der Öffnung und dabei mittig durch den Abströmkanal verläuft. Ein solcher Längsschnitt definiert die Symmetrieebene der Ausbuchtung.

Eine weitere Ausgestaltung sieht vor, dass die Ausbuchtung sich über eine Länge erstreckt, die zwischen dem einfachen und dem zweifachen des Innendurchmessers des Abströmkanals liegt. Weiter kann vorgesehen sein, dass die Ausbuchtung in Längsrichtung des Abströmkanals ihr Dickenmaximum im Bereich zwischen einem Viertel und der Hälfte, insbesondere nach einem Drittel ihrer Gesamtlänge aufweist.

Eine Ausgestaltung sieht vor, dass der Abströmkanal einen kreisförmigen Querschnitt aufweist und die Öffnung elliptisch ausgebildet ist. Die Form der Öffnung ergibt sich allgemein durch den Schnitt des geneigt angeordnete Abströmkanals mit der Oberfläche, in der die Öffnung ausgebildet ist. Sofern die Öffnung elliptisch ausgebildet ist, wird der stromaufseitigen Rand der Öffnung durch eine gebogene Kurve gebildet. Dementsprechend wird auch der stromabseitige Rand der Öffnung durch eine gebogene Kurve gebildet. Die Längsachse der Öffnung geht dabei durch die beiden Scheitelpunkte der Ellipse. In anderen Ausgestaltungen kann die Öffnung rechteckig oder allgemein polygonal ausgebildet sein. Im Fall einer rechteckigen Öffnung bildet die stromaufseitige Seite des Rechtecks den stromaufseitigen Rand und bildet die stromabseitige Seite des Rechtecks den stromabseitigen Rand.

Eine weitere Ausgestaltung der Erfindung sieht vor, dass das die Öffnung abdeckende Gitter erste zueinander parallel verlaufende Gitterstäbe und zweite zueinander parallel verlaufende Gitterstäbe aufweist, wobei die ersten Gitterstäbe und die zweiten Gitterstäbe sich kreuzen und schräg zur Längsachse der Öffnung verlaufen. Dementsprechend sind die Gitterstäbe weder parallel noch rechtwinklig zur Strömungsrichtung ausgerichtet.

Die Gitterstäbe können dabei in Stabform ausgebildet werden oder alternativ durch Stanzen eines Blechs oder andere Blechschnittverfahren stabartig ausgebildet sein.

Dabei weisen die Gitterstäbe beispielsweise einen Durchmesser auf, der im Bereich zwischen 1/200 und 8/200 des Innendurchmessers des Abströmkanals liegt. In einer ersten Annährung kann der Durchmesser der Gitterstäbe mit 1/100 des Innendurchmessers des Abströmkanals angenommen werden. Die Gitterstäbe sind somit im Verhältnis zum Abströmkanal bzw. zur Öffnung vergleichsweise dünn ausgeführt. Beim Gitterdurchmesser ist ein Kompromiss zwischen möglichst geringen Strömungsverlusten und Anforderungen an die Strukturfestigkeit zu finden.

Die Maschenweite richtet sich nach den Parametern der ankommenden Strömung, insbesondere Strömungsgeschwindigkeit und Strömungsturbulenz. Sie ist in Ausführungsbeispielen derart bemessen, dass die ersten Gitterstäbe und die zweiten Gitterstäbe jeweils einen Abstand zueinander aufweisen, der im Bereich zwischen 1/20 und 4/20 des Innendurchmessers des Abströmkanals liegt. Die Maschenweite stellt dabei einen Kompromiss dar zwischen einerseits einer möglichst geringen Verblockung des Abströmkanals einerseits (erreicht durch eine große Maschenweite) und andererseits einer möglichst guten Ausmischung der kohärenten Strukturen, welche durch die Hauptströmung definiert werden (erreicht durch eine geringe Maschenweite). Dementsprechend kann eine Verringerung der Maschenweite mögliche akustische Resonanzen weiter reduzieren.

In Ausführungsbeispielen sind die Gitterstäbe im Querschnitt kreisförmig oder polygonal ausgebildet. Alternativ kann vorgesehen sein, dass die Gitterstäbe im Querschnitt als aerodynamisch geformte Schaufelprofile ausgebildet sind, die das vorbeiströmenden Fluid möglichst verlustfrei in den Abströmkanal umlenken. Eine solche Ausführungsvariante ist insbesondere dann vorteilhaft, wenn der Gitterstabdurchmesser im Verhältnis zum Innendurchmesser des Abströmkanals vergleichsweise groß ist, dieses Verhältnis beispielsweise größer als 1/20 ist.

Eine weitere Ausgestaltung sieht vor, dass das Gitter ausschließlich angrenzend den stromaufseitigen Rand der Öffnung ausgebildet ist und unter Ausbildung einer Hinterkante vor dem stromabseitigen Rand der Öffnung endet. Die Hinterkante des Gitters kann dabei gerade oder gebogen verlaufen. Bei einer solchen Ausgestaltung ist somit nur der stromaufseitige Teil der Entnahmeöffnung bedeckt. Beispielsweise ist nur die stromaufseitige erste Hälfte der Entnahmeöffnung mit dem Gitter bedeckt. Eine solche Ausgestaltung ist mit dem Vorteil verbunden, dass eine etwaige Verblockung der Entnahmeöffnung und damit verbundene Strömungsverluste sicher verhindert werden, da der stromabliegende Teil der Entnahmeöffnung vom Gitter nicht bedeckt ist. Die Fläche der Öffnung, die durch das Gitter abgedeckt wird, stellt einen Kompromiss dar zwischen einerseits möglichst geringen Strömungsverlusten bei einer Massenstromabnahme durch den geöffneten Abströmkanal und andererseits einer effizienten Ausmischung der turbulenten Strukturen im geschlossenen Anwendungsfall (bei geschlossenem Abströmkanal ohne Massenstromentnahme).

Dabei können auch Ausgestaltungen vorliegen, bei denen die Öffnung vollständig durch das Gitter verschlossen ist.

Es wird darauf hingewiesen, dass die überströmte Oberfläche, in der die Öffnung ausgebildet ist, in Ausgestaltungen eben ausgebildet ist. Dies ist jedoch nicht notwendigerweise der Fall. Im Falle einer gebogenen Oberfläche und einer entsprechend gebogenen Öffnung ist das Gitter dem Öffnungsverlauf angepasst.

Eine weitere Ausgestaltung der Erfindung sieht vor, dass die Ausbuchtung als Einsatz ausgebildet ist, der in den Abströmkanal einsetzbar ist. Eine solche Ausgestaltung erlaubt es, die Ausbeulung in einem schon vorhandenen Abströmkanal als Nachrüstung bereitzustellen. Der Einsatz kann beispielsweise durch 3D-Druck oder andere Umformverfahren eines Metallblechs bereitgestellt werden. Die Bereitstellung der Ausbuchtung in einem Einsatz stellt jedoch nur eine Ausführungsvariante dar. In alternativen Ausgestaltungen kann vorgesehen sein, dass die Ausbuchtung integral mit dem Abströmkanal ausgebildet ist.

Eine Ausführungsvariante hierzu sieht vor, dass der Einsatz zusätzlich zu der Ausbuchtung auch das Gitter umfasst. Ausbuchtung und Gitter können auf diese Weise gemeinsam bereitgestellt werden. Eine solche Ausgestaltung ist auch insofern vorteilhaft, als mit der Befestigung des Einsatzes im Abströmkanal (beispielsweise durch Bohrlöcher) auch das Gitter sicher in der Öffnung befestigt und positioniert ist.

Es wird darauf hingewiesen, dass die Oberfläche, in der die Öffnung ausgebildet ist, notwendigerweise eine Dicke aufweist, die sich aus dem Abstand zwischen der Außenseite und der Innenseite der Oberfläche ergibt. Dementsprechend hat auch die Öffnung eine entsprechende Dicke. Eine Ausgestaltung sieht dabei vor, dass die Ausbeulung bereits an der Außenseite der Oberfläche in der Öffnung ansetzt, um eine Strömungsablösung in effektiver Weise stromab in den Abströmkanal zu verschieben.

In einem weiteren Erfindungsaspekt betrifft die Erfindung ein Gasturbinentriebwerk, das mindestens eine Oberfläche umfasst, wobei die Oberfläche einen Lufteinlass gemäß Anspruch 1 aufweist. Die betrachtete Oberfläche ist beispielsweise die Oberfläche einer Triebwerksgondel oder die Oberfläche eines Gehäuses eines Triebwerkskerns. Dabei wird darauf hingewiesen, dass die Erfindung nur beispielhaft an einem Gasturbinentriebwerk ausgebildet ist. Allgemein ist die beschriebene Erfindung für weitere Innen- und Außenströmungen anwendbar.

Die Erfindung wird nachfolgend unter Bezugnahme auf die Figuren der Zeichnung anhand mehrerer Ausführungsbeispiele näher erläutert. Es zeigen:
- Figur 1: eine Seitenschnittansicht eines Gasturbinentriebwerks, in dem die vorliegende Erfindung realisiert werden kann;
- Figur 2: in Draufsicht ein Ausführungsbeispiel eines Lufteinlasses, der eine Öffnung und einen sich daran anschließenden Abströmkanal umfasst, wobei die Öffnung mit einem Gitter abgedeckt ist und der Abströmkanal eine stromaufseitige Ausbuchtung ausbildet;
- Figur 3: den Lufteinlass der Figur 2 in einer Schnittansicht;
- Figur 4: ein Ausführungsbeispiel einer stromaufseitigen Ausbuchtung in einem Abströmkanal eines Luftauslasses in Schnittansicht;
- Figur 5: in Draufsicht schematisch eine Öffnung eines Lufteinlasses, die angrenzend an ihren stromaufseitigen Rand mit einem Gitter versehen ist;
- Figur 6: in perspektivischer, teilweise geschnittener Darstellung einen Einsatz mit einer Ausbuchtung, der in einen Abströmkanal eines Lufteinlasses eingesetzt ist;
- Figur 7: eine Anordnung entsprechend der Figur 6 in einer Ansicht von oben, wobei der Einsatz zusätzlich ein Gitter umfasst, das die Öffnung vollständig abdeckt;
- Figur 8: eine Anordnung entsprechend der Figur 7 in teilweise geschnittener Ansicht;
- Figur 9: eine Anordnung entsprechend der Figur 8, wobei das Gitter sich lediglich angrenzend an den stromaufseitigen Rand der Öffnung erstreckt und eine gerade Hinterkante ausbildet;
- Figur 10: eine Anordnung entsprechend der Figur 8, wobei das Gitter sich lediglich angrenzend an den stromaufseitigen Rand der Öffnung erstreckt und eine gekrümmte Hinterkante ausbildet; und
- Figur 11: eine Anordnung entsprechend der Figur 10 in einer Ansicht von oben, wobei das Gitter vollständig dargestellt ist.

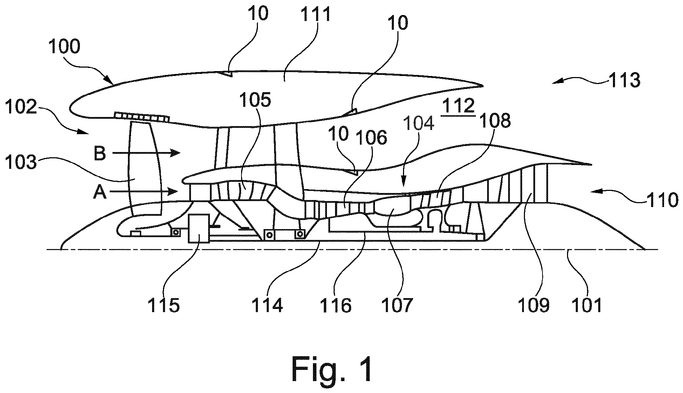

Figur 1 stellt ein Gasturbinentriebwerk 100 mit einer Hauptdrehachse 101 dar. Das Triebwerk 100 umfasst einen Lufteinlass 102 und ein Schubgebläse bzw. Fan 103, das zwei Luftströme erzeugt: einen Kernluftstrom A und einen Bypassluftstrom B. Das Gasturbinentriebwerk 100 umfasst einen Kern 104, der den Kernluftstrom A aufnimmt. Der Triebwerkskern 104 umfasst in Axialströmungsreihenfolge einen Niederdruckverdichter 105, einen Hochdruckverdichter 106, eine Verbrennungseinrichtung 107, eine Hochdruckturbine 108, eine Niederdruckturbine 109 und eine Kernschubdüse 110. Eine Triebwerksgondel 111 umgibt das Gasturbinentriebwerk 100 und definiert einen Bypasskanal 112 und eine Bypassschubdüse 113. Der Bypassluftstrom B strömt durch den Bypasskanal 112. Das Gebläse 103 ist über eine Welle 114 und ein Epizykloidengetriebe 115 an der Niederdruckturbine 109 angebracht und wird durch diese angetrieben.

Im Gebrauch wird der Kernluftstrom A durch den Niederdruckverdichter 105 verdichtet und in den Hochdruckverdichter 106 geleitet, wo eine weitere Verdichtung erfolgt. Die aus dem Hochdruckverdichter 106 ausgestoßene verdichtete Luft wird in die Verbrennungseinrichtung 107 geleitet, wo sie mit Kraftstoff vermischt wird und das Gemisch verbrannt wird. Die resultierenden heißen Verbrennungsprodukte breiten sich dann durch die Hochdruck- und die Niederdruckturbine 108, 109 aus und treiben diese dadurch an, bevor sie zur Bereitstellung einer gewissen Schubkraft durch die Düse 110 ausgestoßen werden. Die Hochdruckturbine 108 treibt den Hochdruckverdichter 106 durch eine geeignete Verbindungswelle 116 an. Das Gebläse 103 stellt allgemein den Hauptteil der Schubkraft bereit. Das Epizykloidengetriebe 115 ist ein Untersetzungsgetriebe.

Die Geometrie des Gasturbinentriebwerks 100 und Komponenten davon wird bzw. werden durch ein herkömmliches Achsensystem definiert, das eine axiale Richtung (die auf die Drehachse 101 ausgerichtet ist), eine radiale Richtung (in der Richtung von unten nach oben in Figur 1) und eine Umfangsrichtung (senkrecht zu der Ansicht in Figur 1) umfasst. Die axiale, die radiale und die Umfangsrichtung verlaufen senkrecht zueinander.

Die Figur 1 zeigt schematisch, dass Lufteinlässe 10 in die Oberflächen des Gasturbinentriebwerks integriert sein können, z. B. in die Oberfläche der Gondel 111 oder in die Oberfläche eines Gehäuses des Triebwerkskerns 104. Des Weiteren können diese auch beispielsweise auf der Innenseite der Gondel 111 angebracht werden, sowie an weiteren innenliegenden Positionen des Triebwerkkerns 104. Nachfolgend werden verschiedene Ausführungsbeispiele solcher Lufteinlässe 10 erläutert.

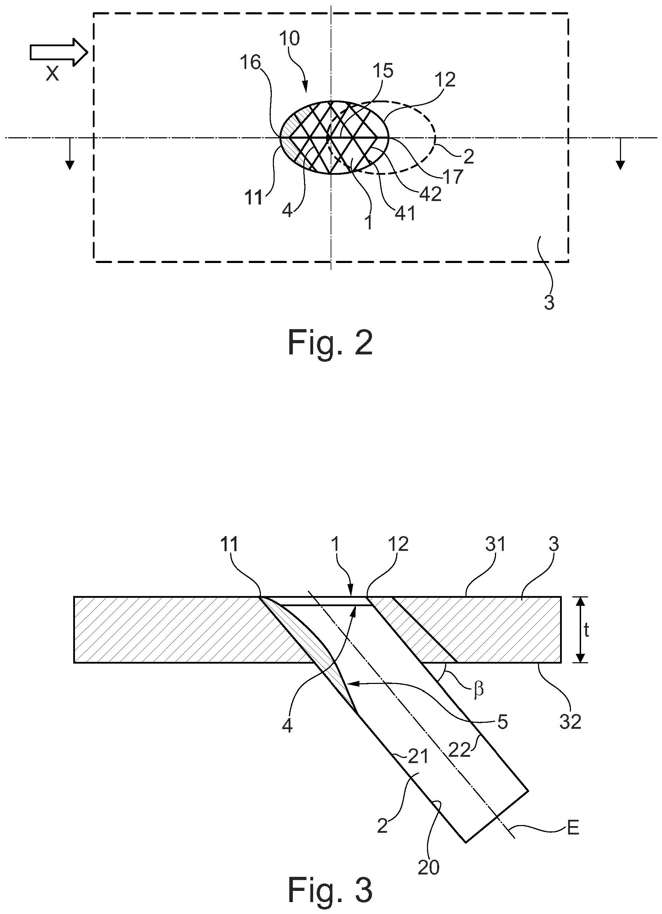

Die Figuren 2 und 3 zeigen ein erstes Ausführungsbeispiel eines Lufteinlasses 10. Der Lufteinlass 10 umfasst eine Öffnung 1 in einer Oberfläche 3 und einen sich an die Öffnung 1 anschließenden Abströmkanal 2. Bei der Oberfläche 3 kann es sich um eine eben oder alternativ um eine gekrümmt ausgebildete Oberfläche handeln. Beispielsweise handelt es sich um eine gekrümmte Oberfläche eines Hauptströmungskanals, von dem der Abströmkanal 2 abzweigt. Der Lufteinlass 10 wird dabei in einer Strömungsrichtung X von einem Fluid, wie zum Beispiel Luft überströmt. Die Öffnung 1 ist in den Figuren als plane Öffnung dargestellt; sie kann jedoch bei gekrümmter Oberfläche 3 jedoch ebenfalls eine Krümmung aufweisen.

Die Öffnung 1 umfasst einen stromaufseitigen Rand 11 und einen stromabseitigen Rand 12. Sie ist im dargestellten Ausführungsbeispiel, jedoch nicht notwendigerweise, elliptisch ausgebildet. Gleichzeitig weist der Abströmkanal 2 einen kreisförmigen Querschnitt auf. Dementsprechend sind der stromaufseitige Rand 11 und der stromabseitigen Rand 12 der Öffnung 1 jeweils gekrümmt ausgebildet. Die Öffnung 1 umfasst des Weiteren eine Längsachse 15, die die Öffnung 1 mittig bzw. in der Symmetrieebene schneidet. Die Längsachse 15 verläuft dabei vom stromaufseitigen Rand 11 zum stromabseitigen Rand 12 und besitzt somit eine Richtung, die der Strömungsrichtung X entspricht. Auf der Längsachse 15 kann, muss aber nicht, zur Verbesserung der Stabilität eine Längsstruktur ausgebildet sein. Die Schnittpunkte 16, 17 der Längsachse 15 mit dem stromaufseitigen Rand 11 und dem stromabseitigen Rand 12 stellen Scheitelpunkte der elliptischen Öffnung 1 dar.

Der Abströmkanal 2 erstreckt sich winklig zu der Oberfläche 3. Er besitzt eine Längsachse E, die einen spitzen Winkel β mit der Oberfläche 3 bzw. der Längsachse 15 bildet. Der spitze Winkel β ergibt sich aus aerodynamischen Gesichtspunkten zur strömungsverlustarmen Luftentnahme. Bei Kanälen, die zur Luftabgabe ausgebildet werden, sind rechte oder stumpfe Winkel β in der Regel anzunehmen. Dabei kann die beschriebene Erfindung trotzdem zur Vermeidung der akustischen Resonanzen eingesetzt werden bei Luftabgabekanälen, die beispielsweise durch ein Ventil verschlossen sind. Allerdings ist hierbei zu beachten, dass die Ausbeulung bei einer Luftabgabe keinen Beitrag zu Verbesserung der Aerodynamik bei offenem Zustand leistet.

Der Abströmkanal 2 ist im dargestellten Ausführungsbeispiel als gerades Rohr dargestellt. Der Abströmkanal 2 kann alternativ gekrümmt ausgebildet sein, wobei er angrenzend an die Öffnung 1 zumindest lokal eine hohlzylindrische Form besitzt. Der Abströmkanal 2 umfasst gemäß der Figur 3 eine Innenwand 20, die eine stromaufseitige Mantelfläche 21 und eine stromabseitige Mantelfläche 22 aufweist. Dabei schließt sich die stromaufseitige Mantelfläche 21 an den stromaufseitigen Rand 11 der Öffnung 1 und die stromabseitige Mantelfläche 22 an den stromabseitigen Rand der Öffnung 1 an.

Die Mantelflächen 21, 22 erstrecken sich dabei jeweils über einen Winkelbereich von 180° in Umfangsrichtung und bilden zusammen die gesamte Mantelfläche der Innenwand 20. Die Figur 3 zeigt einen Schnitt durch die Scheitelpunkte 16, 17 der Öffnung 1.

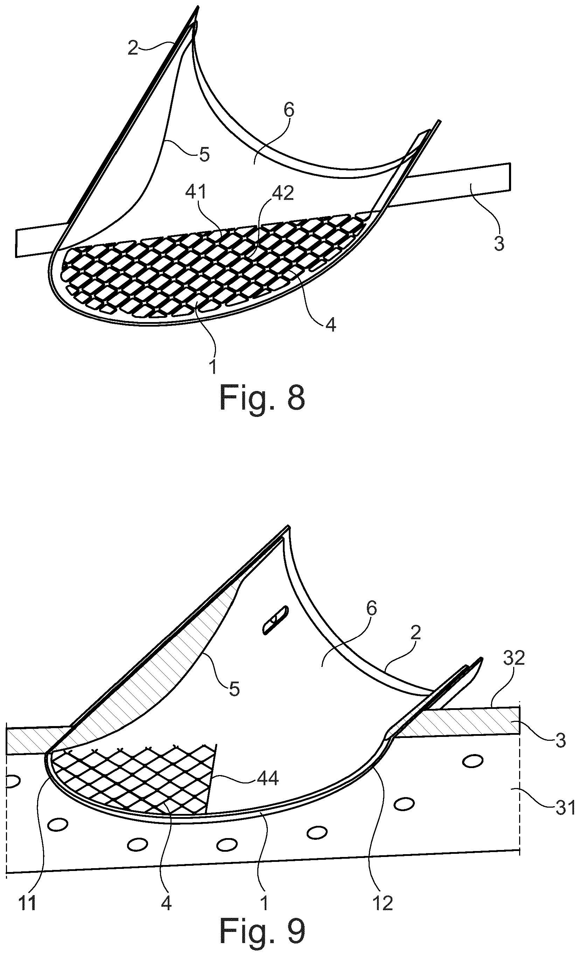

Die Öffnung 1 ist gemäß den Figuren 2 und 3 durch ein Gitter 4 abgedeckt. Das Gitter 4 erstreckt sich über die gesamte Fläche der Öffnung 1. In alternativen Ausgestaltungen erstreckt sich das Gitter 4 lediglich angrenzend an dem stromaufseitigen Rand 11 und endet beabstandet zu dem stromabseitigen Rand 12, wie anhand der Figuren 9-11 erläutert wird. Das Gitter 4 besitzt erste zueinander parallel verlaufende Gitterstäbe 41 und zweite zueinander parallel verlaufende Gitterstäbe 42, die sich kreuzen und die schräg zur Längsachse 15 der Öffnung 1 verlaufen.

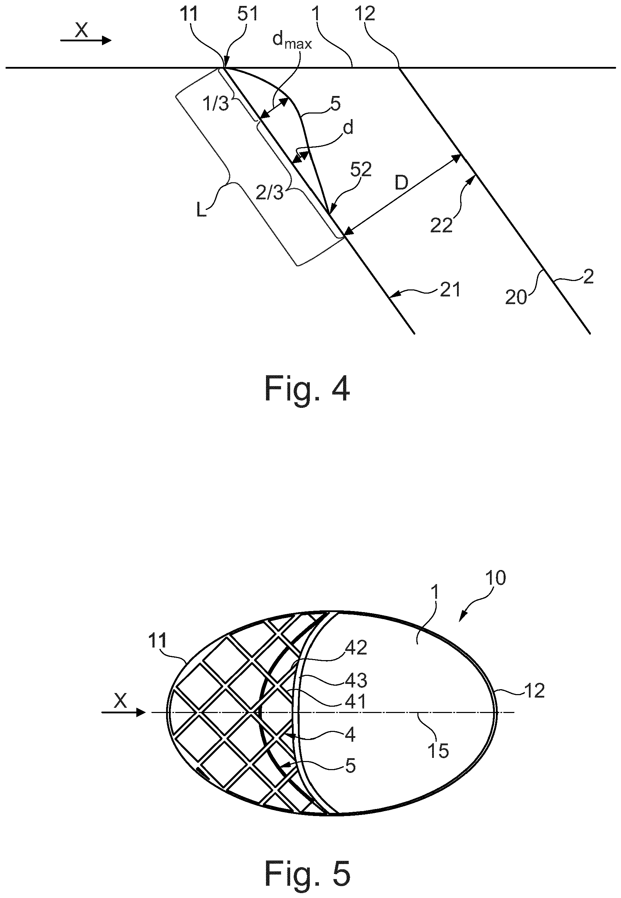

Der Abströmkanal 2 weist im Bereich seiner stromaufseitigen Mantelfläche 21 eine in den Abströmkanal 2 ragende Ausbuchtung 5 auf. Die Ausbuchtung 5 grenzt dabei an den stromaufseitigen Rand 11 der Öffnung 1 an. Von diesem ausgehend erstreckt sie sich in Richtung der Längsachse E des Abströmkanals 2, wobei ihre Dicke zunächst stetig zunimmt, ein Dickenmaximum erreicht und nach dem Dickenmaximum stetig wieder abnimmt. Dies ist in der Figur 4 im Einzelnen dargestellt.

Gemäß der Figur 4 besitzt die Ausbuchtung 5 in einem Anfangsbereich, der an den stromaufseitigen Rand 11 der Öffnung 1 angrenzt, einen tangentialen Übergang 51 zum stromaufseitigen Rand 11. Hiervon ausgehend nimmt die Dicke d der Ausbuchtung 5 bis zu einem als Dickenmaximum bezeichneten Maximalwert dₘₐₓ zu. Anschließend an diesen Maximalwert nimmt die Dicke d wieder ab und die Ausbuchtung 5 bildet in einem Endbereich einen tangentialen Übergang 52 in die kreisförmige Grundform des Abströmkanals 2. Dabei verhält es sich so, dass die Ausbuchtung 5 stromaufwärts des Dickenmaximums dₘₐₓ stärker gekrümmt ist als stromabwärts des Dickenmaximums dₘₐₓ. Das dargestellte Ausführungsbeispiel sieht vor, dass die Ausbuchtung 5 in Längsrichtung des Abströmkanals 2 ihr Dickenmaximum dₘₐₓ nach einem Drittel ihrer Gesamtlänge L erreicht. Der Abstand zwischen dem Punkt ihrer Längserstreckung, an dem die Ausbuchtung 5 ihr Dickenmaximum dₘₐₓ erreicht, und dem tangentialen Übergang 52 beträgt dementsprechend 2/3 der Gesamtlänge L der Ausbuchtung 5. Dies ist jedoch lediglich beispielhaft zu verstehen.

Die Gesamtlänge L der Ausbuchtung liegt in Ausführungsbeispielen zwischen dem einfachen und dem zweifachen des Innendurchmessers D des Abströmkanals 2. Im dargestellten Ausführungsbeispiel liegt das Verhältnis UD bei 1,5.

Gemäß der Figur 3 weist die Oberfläche 3 eine Außenseite 31 und eine Innenseite 32 auf. Der Abstand zwischen der Außenseite 31 und der Innenseite 32 definiert eine Dicke t der Oberfläche, die auch die Dicke t der Öffnung 1 definiert. Es ist insbesondere anhand der Figur 3 zu erkennen, dass die Ausbuchtung 5 an der Außenseite 31 der Oberfläche 3 in der Öffnung ansetzt, d. h. die Ausbuchtung 5 mit ihrem stromaufseitigen Rand einen tangentialen Übergang 51 zur Außenseite 31 des stromaufseitigen Randes 11 bildet.

Die Figur 5 zeigt ein Ausführungsbeispiel, bei dem das die Öffnung 1 abdeckende Gitter 4 ausschließlich angrenzend an den stromaufseitigen Rand 11 der Öffnung ausgebildet ist und eine Hinterkante 43 bildet, die vor dem stromaufseitigen Rand 12 der Öffnung 1 endet. Dabei ist die Hinterkante 43 konkav gebogen. Hierdurch wird sichergestellt, dass ein Teil der in den Abströmkanal 2 eingeleiteten Strömung mit möglichst geringen strömungsmechanischen Verlusten in den Abströmkanal 2 einströmen kann. Die Form der Hinterkante wird entsprechend der Stromlinien des Luftentnahmemassenstroms ausgestaltet und kann in erster Näherung gekrümmt ähnlich zur stromaufseitigen Vorderkante 11 ausgestaltet werden, wie in Abbildung 5 zu sehen ist.

Das Gitter 4 weist gemäß der Figur 5 wiederum erste und zweite jeweils zueinander parallel verlaufende und sich kreuzende Gitterstäbe 41, 42 auf. Die Gitterstäbe 41, 42 verlaufen dabei schräg zur Längsachse 15 der Öffnung 1. Die Gitterstäbe 41, 42 können im Querschnitt kreisförmig ausgebildet sein. Alternativ kann vorgesehen sein, dass die Gitterstäbe als aerodynamisch geformte Schaufelprofile ausgebildet sind, die das vorbeiströmende Fluid teilweise in den Abströmkanal 2 umlenken. Letzteres ist insbesondere dann sinnvoll, wenn die Gitterstäbe 41, 42 einen vergleichsweisen großen Durchmesser aufweisen.

In Ausführungsvarianten ist vorgesehen, dass die Gitterstäbe 41, 42 im Querschnitt kreisförmig ausgebildet sind und einen Durchmesser aufweisen, der im Bereich zwischen 1/200 und 8/200 des Innendurchmessers D des Abströmkanals 2 liegt. Beispielsweise besitzen die Gitterstäbe 41, 42 einen Durchmesser von 1/100 des Innendurchmessers D des Abströmkanals. Die Maschenweite des Gitters 4 liegt beispielsweise im Bereich zwischen 1/20 und 4/20 des Innendurchmessers D des Abströmkanals 2, beispielsweise bei 1/10 des Innendurchmessers D. Bei der Verwendung von Gittern mit vergleichsweise geringen Materialstärken können die Gitterstäbe auch quadratische beziehungsweise rechtwinklige Querschnitte aufweisen und direkt aus Blech gestanzt oder gelasert werden.

In einem solchen Fall gelten die für den Durchmesser genannten beispielhaften Zahlenwerte entsprechend für die Diagonale des Rechtecks.

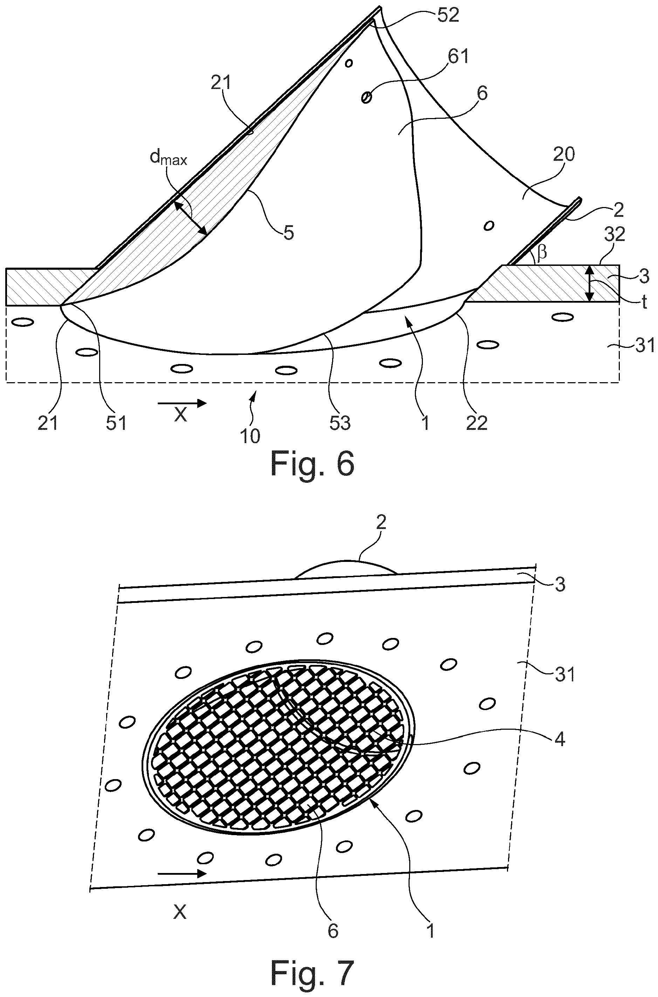

Die Figur 6 zeigt in einer perspektivischen Darstellung ein Ausführungsbeispiel eines Lufteinlasses 10, der vom grundsätzlichen Aufbau her dem Lufteinlass der Figuren 2 und 3 entspricht. Dabei wird darauf hingewiesen, dass die Darstellung insofern unterschiedlich ist, als der Abströmkanal 2 sich in der Figur 6 schräg nach oben erstreckt. Die Strömungsrichtung des Fluids ist wiederum mit X angegeben.

Vom grundsätzlichen Aufbau her wird auf die Ausführungen zu den Figuren 2 bis 4 Bezug genommen. Bei der Darstellung der Figur 6 ist zu erkennen, dass die Ausbuchtung 5 nicht nur einen Verlauf in Längsrichtung des Abströmkanals 2, sondern auch einen Verlauf in Umfangsrichtung besitzt. In Längsrichtung des Abströmkanals 2 bildet die Ausbuchtung 5 wie erläutert ein Dickenmaximum dₘₐₓ aus. In Umfangsrichtung variiert die Dicke d der Ausbuchtung 5 ebenfalls. Dabei nimmt die Ausbuchtung 5 in Umfangsrichtung eine maximale Dicke zwischen zwei Seitenkanten 53 an, wobei in der Figur 6 eine der Seitenkanten 53 zu erkennen ist. Die Ausbuchtung 5 ist insgesamt symmetrisch ausgebildet und verläuft somit zwischen zwei solchen Seitenkanten 53. Das Maximum der Dicke der Ausbuchtung 5 in Umfangsrichtung wird dabei entlang der durch die Längsachse 15 der Öffnung 1 gebildeten Ebene erreicht, d. h. die Ausbuchtung 5 an der stromaufseitigen Mantelfläche 21 ist in einem Längsschnitt des Abströmkanals maximal, der durch die Längsachse 15 der Öffnung 1 und dabei mittig durch den Abströmkanal 2 verläuft.

Bei dem Ausführungsbeispiel der Figur 6 ist vorgesehen, dass die Ausbuchtung 5 an einem Einsatz 6 ausgebildet ist, der in den Abströmkanal 2 einsetzbar ist. Zur Befestigung des Einsatzes 6 im Abströmkanal 2 sind Bohrlöcher 61 vorgesehen. Die Ausbildung der Ausbuchtung 5 an einem Einsatz 6 erlaubt es, die Ausbuchtung 5 nachträglich in bereits montierten Lufteinlässen 10 auszubilden. Der Einsatz 6 kann dabei beispielsweise durch 3D-Druck, Spritzguss oder weitere Umformtechniken hergestellt werden. Alternativ ist die Ausbuchtung 5 unmittelbar in die Innenwand 20 des Abströmkanals 2 integriert.

Weiter ist in der Figur 6 gut zu erkennen, dass die Ausbeulung 5 an der Außenseite 31 der Oberfläche 3 ansetzt und dort einen tangentialen Übergang 51 zum stromaufseitigen Rand 11 der Öffnung 1 bildet.

Die Figur 7 zeigt den Lufteinlass 10 der Figur 6 in einer Ansicht schräg von oben auf die Außenseite 31 der Oberfläche 3, wobei auch das die Öffnung 1 abdeckende Gitter 4 dargestellt ist. Das Gitter 4 bedeckt dabei entsprechend der Ausgestaltung der Figuren 2 und 3 die Öffnung 1 vollständig. Bei dem Ausführungsbeispiel der Figur 7 ist das Gitter durch Stanzen eines Blechs gebildet, welches auch durch weitere Blechschneidverfahren hergestellt werden kann

Dies ist anhand der Figur 8 genauer zu erkennen, wobei die Figur 8 eine teilweise Ansicht der Ausführungsvariante der Figur 7 darstellt. Danach umfasst das Gitter 4 wiederum Gitterstäbe 41, 42, die sich kreuzen und schräg zur Längsachse der Öffnung 1 verlaufen. Bei den Gitterstäben 41, 42 handelt es sich jedoch nicht um im Querschnitt kreisförmige Stäbe. Vielmehr sind die Gitterstäbe durch die nach dem Stanzen eines Blechs verbleibenden Strukturen gebildet, die im Sinne der vorliegenden Erfindung ebenfalls als Gitterstäbe bezeichnet werden, da sie jeweils parallel verlaufende Strukturen bilden.

Die Figur 9 zeigt eine Abwandlung, bei der das Gitter 4 nur angrenzend an den stromaufseitigen Rand 11 der Öffnung 1 ausgebildet ist und eine gerade verlaufende Hinterkante 44 ausbildet.

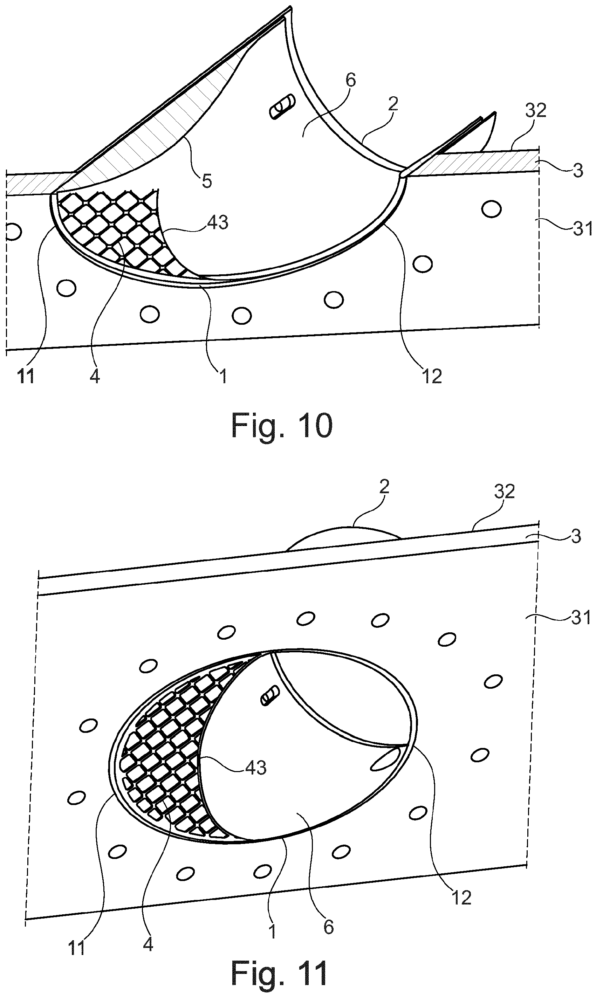

Die Figuren 10 und 11 zeigen in geschnittener Ansicht und in einer Ansicht auf die Außenseite 31 der Oberfläche 3 eine Abwandlung, bei der das Gitter ähnlich wie bei der Ausgestaltung der Figur 5 sich nur angrenzend an den stromaufseitigen Rand 11 erstreckt und dabei eine konkav gebogene Hinterkante 43 ausbildet, die beabstandet zu dem stromabseitigen Rand 12 der Öffnung 1 ist.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen.

Sofern Bereiche definiert sind, so umfassen diese sämtliche Werte innerhalb dieser Bereiche sowie sämtliche Teilbereiche, die in einen Bereich fallen.

## Patentansprüche

1. Lufteinlass (10) in einer Oberfläche (3), der aufweist:
- eine Öffnung (1) in der Oberfläche (3), die eine Längsachse (15) aufweist, wobei der Lufteinlass (10) dazu vorgesehen ist, in Richtung der Längsachse (15) mit einem Fluid überströmt zu werden, und wobei die Öffnung (1) einen stromaufseitigen Rand (11) und einen stromabseitigen Rand (12) umfasst,
- einen sich an die Öffnung (1) anschließenden Abströmkanal (2), der sich winklig zu der Oberfläche (3) erstreckt, wobei der Abströmkanal (2) eine Innenwand (20) umfasst, die eine stromaufseitige Mantelfläche (21) und eine stromabseitige Mantelfläche (22) aufweist, wobei die stromaufseitige Mantelfläche (21) sich an den stromaufseitigen Rand (11) der Öffnung (1) und die stromabseitige Mantelfläche (22) sich an den stromabseitigen Rand (12) der Öffnung (1) anschließt,
**dadurch gekennzeichnet,**
- **dass** die Öffnung (1) angrenzend an den stromaufseitigen Rand (11) mit einem Gitter (4) teilweise oder vollständig abgedeckt ist, und
- der Abströmkanal (2) im Bereich seiner stromaufseitigen Mantelfläche (21) eine in den Abströmkanal ragende Ausbuchtung (5) aufweist, die in Längsrichtung des Abströmkanals (2) angrenzend an den stromaufseitigen Rand (11) stetig in ihrer Dicke (d) zunimmt, ein Dickenmaximum (dₘₐₓ) bildet und die nach dem Dickenmaximum (dₘₐₓ) stetig in ihrer Dicke abnimmt.

2. Lufteinlass nach Anspruch 1, **dadurch gekennzeichnet, dass** die Ausbuchtung (5) in einem Anfangsbereich einen tangentialen Übergang (51) zum stromaufseitigen Rand (11) der Öffnung und in einem Endbereich einen tangentialen Übergang (52) in eine Grundform des Abströmkanals (2) bildet.

3. Lufteinlass nach Anspruch 1 oder 2, **dadurch gekennzeichnet, dass** die Ausbuchtung (5) stromaufwärts des Dickenmaximums (dₘₐₓ) stärker gekrümmt ist als stromabwärts des Dickenmaximums (dₘₐₓ).

4. Lufteinlass nach einem der vorangehenden Ansprüche, **dadurch gekennzeichnet, dass** die lokale Dicke (d) der Ausbuchtung (5) in Umfangsrichtung variiert und dabei ein Maximum zwischen zwei Seitenkanten (53) der Ausbuchtung (5) einnimmt.

5. Lufteinlass nach Anspruch 4, **dadurch gekennzeichnet, dass** die Ausbuchtung (5) in Umfangsrichtung symmetrisch bezogen auf die Seitenkanten (53) ausgebildet ist.

6. Lufteinlass nach Anspruch 4 oder 5, **dadurch gekennzeichnet, dass** die Ausbuchtung (5) an der stromaufseitigen Mantelfläche (21) in einem Längsschnitt des Abströmkanals (2) maximal ist, der durch die Längsachse (15) der Öffnung (1) und dabei mittig durch den Abströmkanal (2) verläuft.

7. Lufteinlass nach einem der vorangehenden Ansprüche, **dadurch gekennzeichnet, dass** die Ausbuchtung (5) sich über eine Länge (L) erstreckt, die zwischen dem einfachen und dem zweifachen des Innendurchmessers (D) des Abströmkanals (2) liegt.

8. Lufteinlass nach einem der vorangehenden Ansprüche, **dadurch gekennzeichnet, dass** der Abströmkanal (2) einen kreisförmigen Querschnitt aufweist und die Öffnung (1) elliptisch ausgebildet ist.

9. Lufteinlass nach einem der vorangehenden Ansprüche, **dadurch gekennzeichnet, dass** das die Öffnung (1) abdeckende Gitter (4) erste zueinander parallel verlaufende Gitterstäbe (41) und zweite zueinander parallel verlaufende Gitterstäbe (42) aufweist, wobei die ersten Gitterstäbe (41) und die zweiten Gitterstäbe (42) sich kreuzen und schräg zur Längsachse (15) der Öffnung (1) verlaufen.

10. Lufteinlass nach Anspruch 9, **dadurch gekennzeichnet, dass** die Gitterstäbe (41, 42) einen Durchmesser aufweisen, der im Bereich zwischen 1/200 und 8/200 des Innendurchmessers (D) des Abströmkanals (2) liegt, und/oder die ersten Gitterstäbe (41) und die zweiten Gitterstäbe (42) jeweils einen Abstand zueinander aufweisen, der im Bereich zwischen 1/20 und 4/20 des Innendurchmessers (D) des Abströmkanals (2) liegt.

11. Lufteinlass nach Anspruch 9 oder 10, **dadurch gekennzeichnet, dass** die Gitterstäbe (41, 42) im Querschnitt als aerodynamisch geformte Schaufelprofile ausgebildet sind, die das vorbeiströmenden Fluid teilweise in den Abströmkanal (2) umlenken.

12. Lufteinlass nach einem der vorangehenden Ansprüche, **dadurch gekennzeichnet, dass** das Gitter (4) ausschließlich angrenzend den stromaufseitigen Rand (11) der Öffnung (1) ausgebildet ist und unter Ausbildung einer Hinterkante (43, 44) vor dem stromabseitigen Rand (12) der Öffnung (1) endet.

13. Lufteinlass nach einem der vorangehenden Ansprüche, **dadurch gekennzeichnet, dass** die Ausbuchtung (5) an einem Einsatz (6) ausgebildet ist, der in den Abströmkanal (2) einsetzbar ist.

14. Lufteinlass nach Anspruch 13, **dadurch gekennzeichnet, dass** der Einsatz (6) zusätzlich zu der Ausbuchtung (5) auch das Gitter (4) umfasst.

15. Gasturbinentriebwerk (100), das mindestens eine Oberfläche umfasst, wobei die Oberfläche einen Lufteinlass (10) gemäß Anspruch 1 aufweist.

## Claims

1. Air inlet (10) in a surface (3), which has:
- an opening (1) in the surface (3) which has a longitudinal axis (15), wherein a fluid is provided to flow over the air inlet (10) in a direction of the longitudinal axis (15), and wherein the opening (1) comprises an upstream edge (11) and a downstream edge (12),
- an outflow channel (2) which abuts against the opening (1) and extends at an angle to the surface (3), wherein the outflow channel (2) comprises an inner wall (20) which has an upstream casing surface (21) and a downstream casing surface (22), wherein the upstream casing surface (21) abuts against the upstream edge (11) of the opening (1) and the downstream casing surface (22) abuts against the downstream edge (12) of the opening (1),
**characterised in that**
- the opening (1) abutting against the upstream edge (11) is partially or completely covered by a lattice (4), and
- the outflow channel (2) has a bulge (5) projecting into the outflow channel in the region of its upstream casing surface (21), which bulge constantly increases in thickness (d) in a longitudinal direction of the outflow channel (2) abutting against the upstream edge (11), forms a thickness maximum (dₘₐₓ) and constantly decreases in its thickness after the thickness maximum (dₘₐₓ).

2. Air inlet according to claim 1, **characterised in that** the bulge (5) forms a tangential transition (51) to the upstream edge (11) of the opening in a starting region and a tangential transition (52) to a base form of the outflow channel (2) in an end region.

3. Air inlet according to claim 1 or 2, **characterised in that** the bulge (5) is curved more greatly upstream of the thickness maximum (dₘₐₓ) than downstream of the thickness maximum (dₘₐₓ).

4. Air inlet according to one of the preceding claims, **characterised in that** the local thickness (d) of the bulge (5) varies in circumferential direction and in so doing assumes a maximum between two side edges (53) of the bulge (5).

5. Air inlet according to claim 4, **characterised in that** the bulge (5) is symmetrical relative to the side edges (53) in the circumferential direction.

6. Air inlet according to claim 4 or 5, **characterised in that** the bulge (5) is maximal at the upstream casing surface (21) in a longitudinal section of the outflow channel (2) which runs through the longitudinal axis (15) of the opening (1) and in so doing centrally through the outflow channel (2).

7. Air inlet according to one of the preceding claims, **characterised in that** the bulge (5) extends over a length (L) which lies between once and twice the inner diameter (D) of the outflow channel (2).

8. Air inlet according to one of the preceding claims, **characterised in that** the outflow channel (2) has a circular cross-section and the opening (1) is elliptical.

9. Air inlet according to one of the preceding claims, **characterised in that** the lattice (4) covering the opening (1) has first mutually parallel lattice bars (41) and second mutually parallel lattice bars (42), wherein the first lattice bars (41) and the second lattice bars (42) cross one another and run obliquely to the longitudinal axis (15) of the opening (1).

10. Air inlet according to claim 9, **characterised in that** the lattice bars (41, 42) have a diameter which lies in the range between 1/200 and 8/200 of the inner diameter (D) of the outflow channel (2) and/or the first lattice bars (41) and the second lattice bars (42) have a mutual distance apart which lies in the range between 1/20 and 4/20 of the inner diameter (D) of the outflow channel (2).

11. Air inlet according to claim 9 or 10, **characterised in that** the lattice bars (41, 42) are designed in cross-section as aerodynamically shaped blade profiles which deflect the passing fluid partially into the outflow channel (2).

12. Air inlet according to one of the preceding claims, **characterised in that** the lattice (4) is formed exclusively abutting against the upstream edge (11) of the opening (1) and ends by forming a trailing edge (43, 44) in front of the downstream edge (12) of the opening (1).

13. Air inlet according to one of the preceding claims, **characterised in that** the bulge (5) is designed on an insert (6) which can be inserted in the outflow channel (2).

14. Air inlet according to claim 13, **characterised in that** the insert (6) also comprises the lattice (4) in addition to the bulge (5).

15. Gas turbine engine (100) which comprises at least one surface, wherein the surface has an air inlet (10) according to claim 1.

## Revendications

1. Entrée d'air (10) dans une surface (3) comprenant :
- une ouverture (1) dans la surface (3), qui présente un axe longitudinal (15), l'entrée d'air (10) étant prévue pour être submergée par un fluide dans la direction de l'axe longitudinal (15), et l'ouverture (1) comprenant un bord côté amont (11) et un bord côté aval (12),
- un canal d'écoulement (2) qui se raccorde à l'ouverture (1) et qui s'étend en formant un angle avec la surface (3), le canal d'écoulement (2) comprenant une paroi intérieure (20) qui présente une surface d'enveloppe côté amont (21) et une surface d'enveloppe côté aval (22), la surface d'enveloppe côté amont (21) se raccordant au bord côté amont (11) de l'ouverture (1) et la surface d'enveloppe côté aval (22) se raccordant au bord côté aval (12) de l'ouverture (1),
**caractérisée en ce que**
- l'ouverture (1) est partiellement ou entièrement recouverte d'une grille (4) adjacente au bord côté amont (11), et
- le canal d'écoulement (2) présente, dans la zone de sa surface d'enveloppe côté amont (21), un renflement (5) faisant saillie dans le canal d'écoulement, dont l'épaisseur (d) augmente constamment dans la direction longitudinale du canal d'écoulement (2), de manière adjacente au bord côté amont (11), forme un maximum d'épaisseur (dₘₐₓ) et dont l'épaisseur diminue constamment selon le maximum d'épaisseur (dₘₐₓ).

2. Entrée d'air selon la revendication 1, **caractérisée en ce que** le renflement (5) forme, dans une zone initiale, une transition tangentielle (51) vers le bord côté amont (11) de l'ouverture et, dans une zone finale, une transition tangentielle (52) vers une forme de base du canal d'écoulement (2).

3. Entrée d'air selon la revendication 1 ou 2, **caractérisée en ce que** le renflement (5) est plus courbé en amont du maximum d'épaisseur (dₘₐₓ) qu'en aval du maximum d'épaisseur (dₘₐₓ).

4. Entrée d'air selon l'une des revendications précédentes, **caractérisée en ce que** l'épaisseur locale (d) du renflement (5) varie dans la direction circonférentielle en prenant un maximum entre deux bords latéraux (53) du renflement (5).

5. Entrée d'air selon la revendication 4, **caractérisée en ce que** le renflement (5) est réalisé de manière symétrique dans la direction circonférentielle par rapport aux bords latéraux (53).

6. Entrée d'air selon la revendication 4 ou 5, **caractérisée en ce que** le renflement (5) sur la surface d'enveloppe côté amont (21) est maximal dans une coupe longitudinale du canal d'écoulement (2), qui passe par l'axe longitudinal (15) de l'ouverture (1) et ainsi au milieu du canal d'écoulement (2).

7. Entrée d'air selon l'une des revendications précédentes, **caractérisée en ce que** le renflement (5) s'étend sur une longueur (L) comprise entre une et deux fois le diamètre intérieur (D) du canal d'écoulement (2).

8. Entrée d'air selon l'une des revendications précédentes, **caractérisée en ce que** le canal d'écoulement (2) présente une section transversale circulaire et l'ouverture (1) est elliptique.

9. Entrée d'air selon l'une des revendications précédentes, **caractérisée en ce que** la grille (4) recouvrant l'ouverture (1) présente des premiers barreaux de grille (41) parallèles entre eux et des deuxièmes barreaux de grille (42) parallèles entre eux, les premiers barreaux de grille (41) et les deuxièmes barreaux de grille (42) se croisant et s'étendant obliquement par rapport à l'axe longitudinal (15) de l'ouverture (1).

10. Entrée d'air selon la revendication 9, **caractérisée en ce que** les barreaux de grille (41, 42) présentent un diamètre qui se situe dans la plage entre 1/200 et 8/200 du diamètre intérieur (D) du canal d'écoulement (2), et/ou les premiers barreaux de grille (41) et les deuxièmes barreaux de grille (42) présentent chacun un écart entre eux qui se situe dans la plage entre 1/20 et 4/20 du diamètre intérieur (D) du canal d'écoulement (2).

11. Entrée d'air selon la revendication 9 ou 10, **caractérisée en ce que** les barreaux de grille (41, 42) sont réalisés en section transversale sous la forme de profils d'aubes de forme aérodynamique qui dévient partiellement le fluide qui passe dans le canal d'écoulement (2).

12. Entrée d'air selon l'une des revendications précédentes, **caractérisée en ce que** la grille (4) est formée exclusivement de manière adjacente au bord côté amont (11) de l'ouverture (1) et se termine en formant un bord arrière (43, 44) avant le bord côté aval (12) de l'ouverture (1).

13. Entrée d'air selon l'une des revendications précédentes, **caractérisée en ce que** le renflement (5) est formé sur un insert (6) qui peut être inséré dans le canal d'écoulement (2).

14. Entrée d'air selon la revendication 13, **caractérisée en ce que** l'insert (6) comprend également la grille (4) en plus de la renflement (5).

15. Moteur à turbine à gaz (100) comprenant au moins une surface, ladite surface comprenant une entrée d'air (10) selon la revendication 1.
